# EUROPEAN PATENT SPECIFICATION

(11) **EP 4 462 533 B1**
(45) Date of publication and mention of the grant of the patent: **06.08.2025**
(21) Application number: 24164042.4
(22) Date of filing: 18.03.2024
(51) Int. Cl.: H01M 10/04, H01M 10/0583, H01M 50/466

(54) **ELECTRODE ASSEMBLY**
ELEKTRODENANORDNUNG
ENSEMBLE D'ÉLECTRODES

(30) Priority: 12.05.2023 JP 2023079353
(43) Date of publication of application: 13.11.2024
(73) Proprietor: TOYOTA JIDOSHA KABUSHIKI KAISHA, Aichi-ken 471-8571 (JP)
(72) Inventor: SUGIHARA, Atsushi, Toyota-shi, 471-8571 (JP); KAKISHITA, Kenichi, Toyota-shi, 471-8571 (JP); IZUMI, Jun, Toyota-shi, 471-8571 (JP); MIMURA, Tetsuya, Toyota-shi, 471-8571 (JP); OHATA, Kota, Toyota-shi, 471-8571 (JP); KURASHITA, Nana, Toyota-shi, 471-8571 (JP); TAKAHASHI, Yuki, Toyota-shi, 471-8571 (JP)
(74) Representative: J A Kemp LLP

(56) References cited:
- WO-A1-2023/058955
- CN-A- 110 521 045
- JP-A- 2000 251 944
- JP-A- 2019 053 818
- JP-B2- 5 408 686
- JP-B2- 5 678 270
- US-A1- 2023 013 024
- US-B2- 9 318 748

## Description

### RELATED APPLICATIONS

This non-provisional application is based on Japanese Patent Application No. 2023-079353 filed on May 12, 2023 with the Japan Patent Office.

### BACKGROUND

### Field

The present disclosure relates to an electrode assembly.

### Description of the Background Art

Japanese Patent Laying-Open No. 2022-100813 discloses a so-called laminated electrode assembly in which a plurality of positive electrodes and a plurality of negative electrodes are alternately laminated with a separator interposed therebetween. US 9 318 748 B2 and WO 2023/058955 A1 disclose background art.

### SUMMARY

In the electrode assembly described in Japanese Patent Laying-Open No. 2022-100813, it is concerned that a positional displacement of the electrode with respect to the separator may occur when the electrode assembly is transported or when the electrode assembly is inserted into the cell case.

An object of the present disclosure is to provide an electrode assembly capable of preventing a positional displacement of an electrode with respect to a separator.

According to an aspect of the present disclosure, there is provided an electrode assembly as defined in the claims.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a perspective view schematically illustrating a power storage cell according to an embodiment of the present disclosure;
Fig. 2 is a cross-sectional view of the power storage cell illustrated in Fig. 1;
Fig. 3 is a cross-sectional view of an electrode assembly;
Fig. 4 is a plan view of a separator before being formed in a zigzag shape;
Fig. 5 is a perspective view schematically illustrating a step of connecting an electrode tab and a collector tab;
Fig. 6 is a perspective view schematically illustrating a step of bending an electrode tab and a collector tab; and
Fig. 7 is a perspective view schematically illustrating a step of inserting an electrode assembly into a case body.

### DESCRIPTION OF THE PREFERRED EMBODIMENTS

Embodiments of the present disclosure will be described with reference to the drawings. In the following drawings, the same or corresponding members are denoted by the same reference numerals.

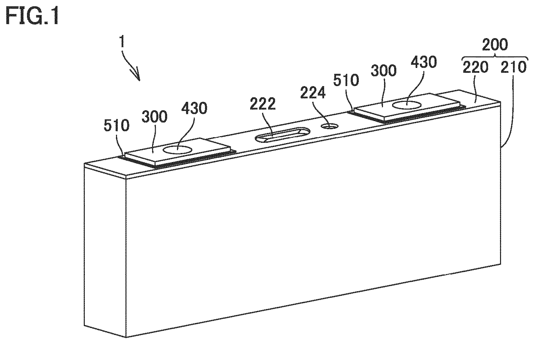

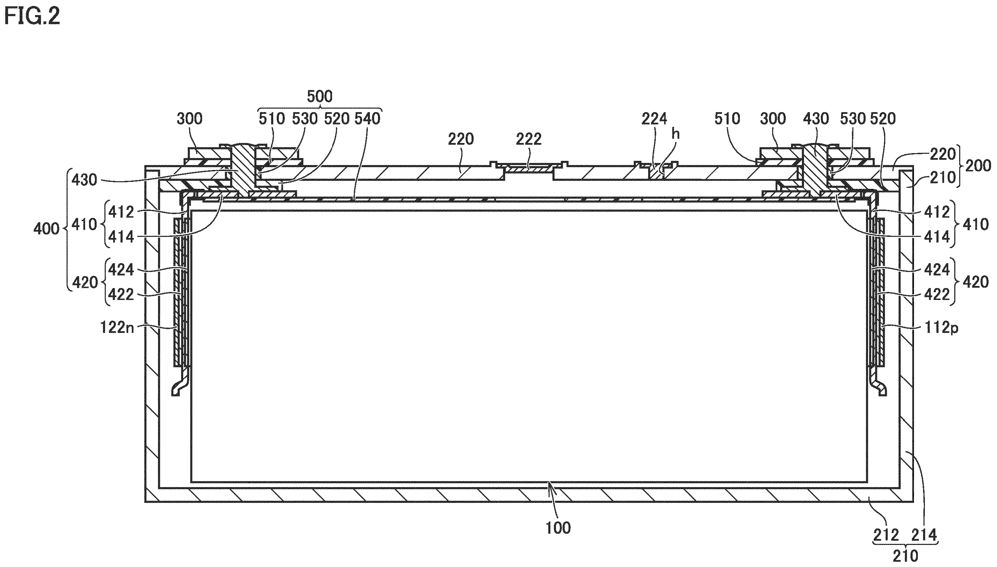

Fig. 1 is a perspective view schematically illustrating a power storage cell 1 according to an embodiment of the present disclosure. Fig. 2 is a cross-sectional view of the power storage cell 1 illustrated in Fig. 1.

As illustrated in Figs. 1 and 2, the power storage cell 1 includes an electrode assembly 100, a cell case 200, an electrolytic solution (not illustrated), a pair of external terminals 300, a pair of connecting members 400, and an insulating member 500.

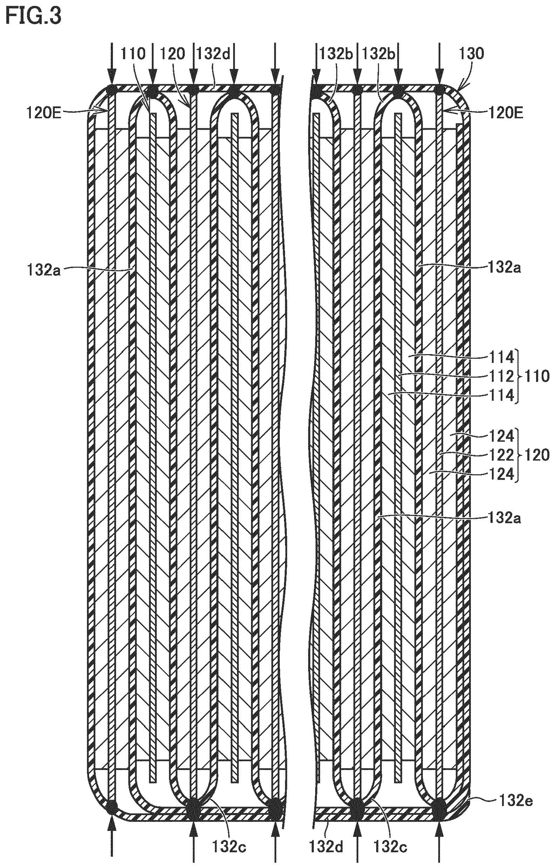

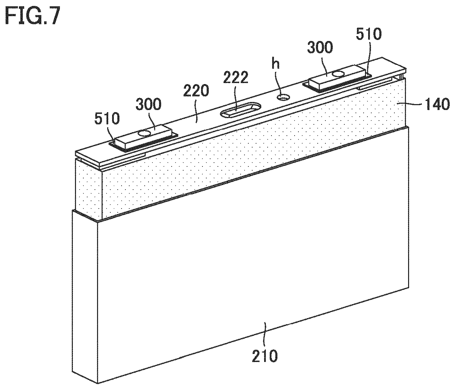

Fig. 3 is a cross-sectional view of the electrode assembly 100. As illustrated in Fig. 3, the electrode assembly 100 includes a plurality of electrodes 110 and 120, a separator 130, and an insulating film 140 (see Fig. 7).

As illustrated in Fig. 3, the plurality of electrodes 110 and 120 are arranged side by side in one direction (the lateral direction in Fig. 3). The plurality of electrodes 110 and 120 include a plurality of positive electrodes 110 and a plurality of negative electrodes 120.

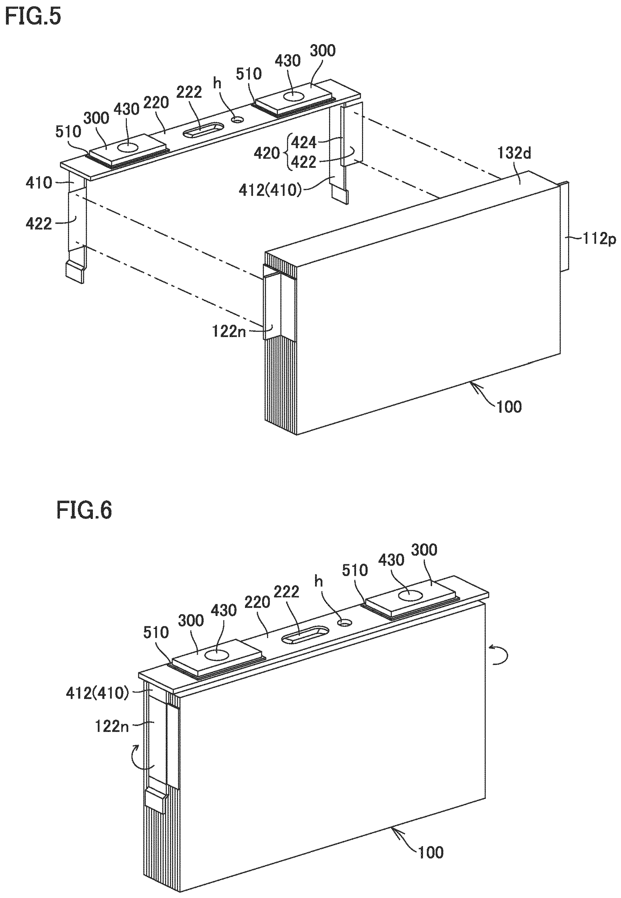

Each positive electrode 110 is formed in a rectangular shape elongated in a width direction (a direction orthogonal to both the one direction and the vertical direction). Each positive electrode 110 includes a positive electrode collector foil 112 and a positive electrode active material layer 114 provided on both surfaces of the positive electrode collector foil 112. As illustrated in Figs. 2 and 5, the positive electrode collector foil 112 includes a positive electrode tab 112p on which the positive electrode active material layer 114 is not provided. The positive electrode tab 112p protrudes toward one side of the width direction (a direction orthogonal to the paper surface of Fig. 3).

Each negative electrode 120 is formed in a rectangular shape elongated in the width direction. Each negative electrode 120 includes a negative electrode collector foil 122 and a negative electrode active material layer 124 provided on both surfaces of the negative electrode collector foil 122. As illustrated in Figs. 2 and 5, the negative electrode collector foil 122 includes a negative electrode tab 122n on which the negative electrode active material layer 124 is not provided. The negative electrode tab 122n protrudes toward the other side of the width direction.

The separator 130 insulates the positive electrode 110 and the negative electrode 120 from each other. The separator 130 is made of an insulating material, and has minute voids that allow ions to pass through. As illustrated in Fig. 3, the separator 130 is formed in a zigzag shape.

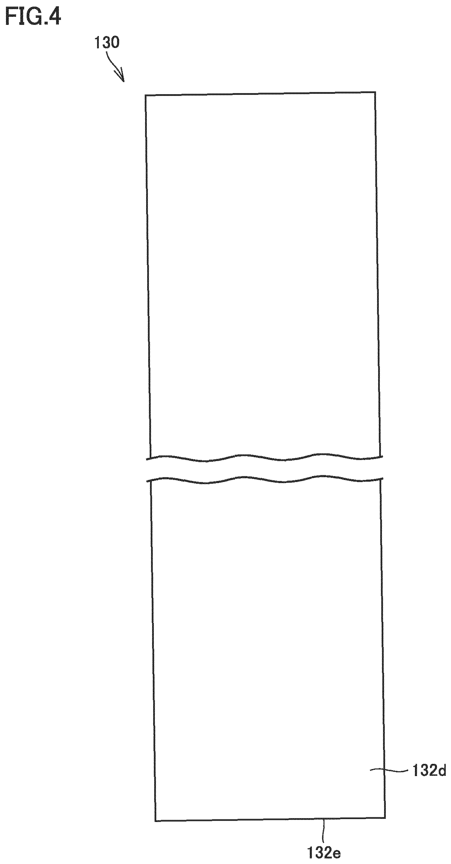

Fig. 4 is a plan view of the separator before being formed in a zigzag shape. As illustrated in Fig. 4, the separator 130 has a rectangular shape before being formed in a zigzag shape. The separator 130 is formed in a zigzag shape and is arranged between the electrodes 110 and 120. The separator 130 includes a plurality of intervening portions 132a, a plurality of upper folded portions 132b, a plurality of lower folded portions 132c, and an outermost covering portion 132d.

Each intervening portion 132a is interposed between a pair of electrodes 110 and 120 adjacent to each other in the one direction. In other words, each intervening portion 132a functions to insulate the positive electrode 110 and the negative electrode 120 from each other. Each intervening portion 132a is formed in a rectangular shape.

Each upper folded portion 132b connects an upper end of one intervening portion 132a of the plurality of intervening portions 132a and an upper end of another intervening portion 132a of the plurality of intervening portions 132a which is adjacent to the one intervening portion 132a on one side of the one direction. In the present embodiment, the upper folded portion 132b is disposed above the positive electrode 110.

Each lower folded portion 132c connects a lower end of one intervening portion 132a of the plurality of intervening portions 132a and a lower end of another intervening portion 132a of the plurality of intervening portions 132a which is adjacent to the one intervening portion 132a on the other side of the one direction. In the present embodiment, the lower folded portion 132c is disposed below the negative electrode 120. In other words, the negative electrode 120 is disposed above the lower folded portion 132c.

Each of the lower folded portions 132c is connected to a lower end of the negative electrode 120, more specifically, a lower end of the negative electrode collector foil 122. Specifically, as indicated by arrows in Fig. 3, heat is applied from the outside of the lower folded portion 132c to the lower folded portion 132c by laser irradiation or the like. Thereby, the lower folded portion 132c is connected (welded) to the lower end of the negative electrode collector foil 122.

The outermost covering portion 132d collectively covers each upper folded portion 132b and each lower folded portion 132c. More specifically, the outermost covering portion 132d collectively covers all of the electrodes 110 and 120, all of the intervening portions 132a, all of the upper folded portions 132b and all of the lower folded portions 132c while being wound around a central axis parallel to the width direction. A terminal end 132e (see Figs. 3 and 4) of the outermost covering portion 132d is configured not to overlap with the positive electrode active material layer 114 and the negative electrode active material layer 124 in the one direction. In the present embodiment, the terminal end 132e of the outermost covering portion 132d is provided below each of the electrodes 110 and 120.

As illustrated in Fig. 3, the outermost covering portion 132d is connected to each lower folded portion 132c. Specifically, as indicated by an arrow in Fig. 3, heat is applied to a portion of the outermost covering portion 132d overlapping with each lower folded portion 132c from the outside of this portion by laser irradiation or the like. Thereby, the outermost covering portion 132d is connected (welded) to each lower folded portion 132c. At this time, each lower folded portion 132c is connected (welded) to the lower end of the negative electrode collector foil 122.

The outermost covering portion 132d is connected to each upper folded portion 132b. Specifically, as indicated by arrows in Fig. 3, heat is applied to a portion of the outermost covering portion 132d overlapping with each upper folded portion 132b from the outside of this portion by laser irradiation or the like. Thereby, the outermost covering portion 132d is connected (welded) to each upper folded portion 132b.

As illustrated in Fig. 3, the plurality of negative electrodes 120 include an outermost negative electrode 120E disposed outermost in one direction. A lower end of the outermost negative electrode 120E is connected to the outermost covering portion 132d. An upper end of the outermost negative electrode 120E is connected to the outermost covering portion 132d. The lower end and the upper end of the outermost negative electrode 120E are connected to the outermost covering portion 132d by laser irradiation or the like in the same manner as described above.

The upper end of the positive electrode 110, more specifically, the upper end of the positive electrode collector foil 112 may be connected to the upper folded portion 132b. Similarly, the lower end of the positive electrode collector foil 112 may be connected to the outermost covering portion 132d.

The insulating film 140 collectively covers the peripheral surface and bottom surface of the plurality of electrodes 110 and 120 and the separator 130. In Fig. 7, the insulating film 140 is indicated by dots.

The cell case 200 houses the electrode assembly 100. The cell case 200 contains an electrolytic solution (not illustrated). The cell case 200 is sealed. The cell case 200 includes a case body 210 and a lid 220.

The case body 210 has an opening that opens upward. The case body 210 is made of a metal such as aluminum. As illustrated in Fig. 2, the case body 210 includes a bottom wall 212 and a peripheral wall 214. The bottom wall 212 is formed in a rectangular flat plate shape. The peripheral wall 214 rises from the bottom wall 212. The peripheral wall 214 is formed in a quadrangular cylindrical shape. The length of the peripheral wall 214 in the width direction is longer than the length of the peripheral wall 214 in the thickness direction. The length of the peripheral wall 214 in the height direction is longer than the length of the peripheral wall 214 in the thickness direction.

The lid 220 closes the opening of the case body 210. The lid 220 is connected to the opening by welding or the like. The lid 220 is formed in a flat plate shape. The lid 220 is made of a metal such as aluminum. The lid 220 includes a pressure release valve 222 and a sealing member 224.

The pressure release valve 222 is formed at a central portion of the lid 220. The pressure release valve 222 is configured to break when the internal pressure of the cell case 200 becomes equal to or higher than a predetermined pressure. When the pressure release valve 222 is broken, the gas in the cell case 200 is released to the outside of the cell case 200 through the pressure release valve 222, which reduces the internal pressure of the cell case 200.

The sealing member 224 seals a liquid injection port h formed on the lid 220. The liquid injection port h is a through hole for injecting an electrolytic solution into the cell case 200 in the manufacturing process of the power storage cell 1. After the electrolytic solution is injected into the case body 210 through the liquid injection port h, the liquid injection port h is sealed by the sealing member 224.

The pair of external terminals 300 is fixed to the cell case 200. One of the pair of external terminals 300 is a positive external terminal, and the other is a negative external terminal. Each external terminal 300 is fixed to an upper surface of the lid 220 via an upper insulating portion 510 which will be described later. Each external terminal 300 is made of a metal such as aluminum. Each external terminal 300 is formed, for example, in a rectangular parallelepiped shape. A bus bar (not illustrated) is connected to each external terminal 300 by welding or the like.

The pair of connecting members 400 (see Fig. 2) connects a plurality of electrode tabs 112p and a plurality of electrode tabs 122n to the pair of external terminals 300, respectively. More specifically, one of the pair of connecting members 400 connects the plurality of positive electrode tabs 112p to the positive external terminal 300, and the other connecting member 400 connects the plurality of negative electrode tabs 122n to the negative external terminal 300. Since the pair of connecting members 400 have substantially the same structure, only one connecting member 400 will be described below.

The connecting member 400 includes a collector tab 410, a subtab 420, and a connecting pin 430.

The collector tab 410 has a side portion 412 and an upper portion 414. The side portion 412 is arranged on a side surface of the electrode assembly 100 in the width direction. The upper portion 414 is arranged on an upper surface of the electrode assembly 100. The upper portion 414 extends inward in the width direction from an upper end of the side portion 412.

The subtab 420 connects the plurality of positive electrode tabs 112p to the collector tab 410. One end 422 of the subtab 420 is connected to the plurality of positive electrode tabs 112p by welding or the like, and the other end 424 of the subtab 420 is connected to the side portion 412 of the collector tab 410 by welding or the like.

The connecting pin 430 connects the collector tab 410 to the external terminal 300. The connecting pin 430 connects the upper portion 414 to the external terminal 300. Specifically, the lower end of the connecting pin 430 is inserted into a through hole provided on the upper portion 414 and is connected to the upper portion 414 by welding or the like, and the upper end of the connecting pin 430 is inserted into a through hole provided on the external terminal 300 and is connected to the external terminal 300 by welding, caulking or the like.

The insulating member 500 insulates the cell case 200 and the connecting member 400 from each other. The insulating member 500 includes an upper insulating portion 510, a lower insulating portion 520, an insulator 530, and an insulating plate 540.

The upper insulating portion 510 is fixed to the upper surface of the lid 220. The upper insulating portion 510 is disposed between the lid 220 and the external terminal 300. The upper insulating portion 510 is provided with an insertion hole through which the connecting pin 430 is inserted.

The lower insulating portion 520 is fixed to the lower surface of the lid 220. The lower insulating portion 520 is disposed between the lid 220, and the upper portion 414 and a lower portion of the connecting pin 430. The lower insulating portion 520 is provided with an insertion hole through which the connecting pin 430 is inserted.

The insulator 530 is disposed between the connecting pin 430 and the lid 220. The insulator 530 is formed in a cylindrical shape, and is configured to surround the connecting pin 430.

The insulating plate 540 is fixed to the lower surface of the upper portion 414. The insulating plate 540 is disposed on the electrode assembly 100. A through hole is formed in a portion of the insulating plate 540 located below the pressure release valve 222 and a portion of the insulating plate 540 located below the liquid injection port h.

Next, a process of manufacturing the power storage cell 1 will be described with reference to Figs. 5 to 7.

First, while the separator 130 is being formed in a zigzag shape, each electrode 110 and each electrode 120 are alternately disposed between a pair of intervening portions 132a. After winding the outermost covering portion 132d of the separator 130, by irradiating a laser beam from the outside of the outermost covering portion 132d, for example, each lower folded portion 132c is connected (welded) to the outermost covering portion 132d, the lower end of each negative electrode collector foils 122 is connected (welded) to each lower folded portion 132c, each upper folded portion 132b is connected (welded) to the outermost covering portion 132d, and the lower end and the upper end of each outermost negative electrode 120E are connected (welded) to the outermost covering portion 132d.

Next, as illustrated in Fig. 5, one end 422 of the subtab 420 is connected to the plurality of electrode tabs 112p and 122n by welding or the like. Then, as indicated by arrows in Fig. 6, one end 422 and the plurality of electrode tabs 112p and 122n are bent in such a manner that the end 422 of the subtab 420 is in contact with the side portion 412 of the collector tab 410.

Subsequently, as illustrated in Fig. 7, after the peripheral surface and bottom surface of the plurality of electrodes 110, 120 and the separator 130 are collectively covered with the insulating film 140, the electrode assembly 100 is inserted into the case body 210. Then, the lid 220 is welded to the case body 210 to close the opening.

Thereafter, the electrolytic solution is supplied into the cell case 200 through the liquid injection port h, and the liquid injection port h is sealed with the sealing member 224.

As described above, in the electrode assembly 100 according to the present embodiment, since the separator 130 is formed in a zigzag shape and each lower folded portion 132c is connected to the negative electrode 120, at least the positional displacement of the negative electrode 120 with respect to the separator 130 is prevented.

Further, since each lower folded portion 132c is connected to the outermost covering portion 132d, the relative displacement between the lower folded portions 132c is prevented. In addition, since the positive electrode 110 is disposed in a space surrounded by a pair of the lower folded portion 132c and the upper folded portion 132b adjacent to each other, the positional displacement of the positive electrode 110 with respect to the separator 130 is further prevented.

In the above embodiment, the negative electrode 120 is disposed above the lower folded portion 132c and the lower folded portion 132c is connected to the lower end of the negative electrode 120, but the positive electrode 110 may be disposed above the lower folded portion 132c and the lower folded portion 132c may be connected to the lower end of the positive electrode 110.

Even in a case where either the positive electrode 110 or the negative electrode 120 is disposed above the lower folded portion 132c, each upper folded portion 132b may be connected to the upper end of each electrode 110 or 120. In this case, each lower folded portion 132c may not be connected to each electrode 110 or 120.

## Claims

1. An electrode assembly (100) comprising:
a plurality of electrodes (110, 120) arranged side by side in one direction; and
a separator (130) formed in a zigzag shape and configured to insulate the plurality of electrodes from each other,
wherein
each of the plurality of electrodes (110, 120) includes:
an electrode collector foil (112,122), and
an electrode active material layer (114,124) provided on both surfaces of the electrode collector foil,
the separator includes:
a plurality of intervening portions (132a), each of which is interposed between a pair of electrodes adjacent to each other in the one direction;
an upper folded portion (132b) which connects an upper end of one intervening portion of the plurality of intervening portions and an upper end of another intervening portion of the plurality of intervening portions which is adjacent to the one intervening portion on one side of the one direction;
a lower folded portion (132c) which connects a lower end of the one intervening portion of the plurality of intervening portions and a lower end of another intervening portion of the plurality of intervening portions which is adjacent to the one intervening portion on the other side of the one direction; and
an outermost covering portion (132d) which collectively covers the upper folded portion and the lower folded portion,
at least one of the upper folded portion and the lower folded portion is welded to the electrode collector foil of the electrode, and
the lower folded portion and the upper folded portion are welded to the outermost covering portion.

2. The electrode assembly according to claim 1, wherein
the plurality of electrodes include a plurality of positive electrodes (110) and a plurality of negative electrodes (120),
the negative electrode is disposed above the lower folded portion (132c), and
the lower folded portion is welded to a lower end of the electrode collector foil of the negative electrode (120).

3. The electrode assembly according to claim 1 or 2, wherein
the plurality of electrodes include a plurality of positive electrodes (110) and a plurality of negative electrodes (120), and
an upper end of the negative electrode is welded to the outermost covering portion.

4. The electrode assembly according to any one of claims 1 to 3, wherein
the plurality of electrodes include a plurality of positive electrodes (110) and a plurality of negative electrodes (120),
the plurality of negative electrodes include an outermost negative electrode (120E) disposed outermost in the one direction, and
a lower end of the outermost negative electrode is welded to the outermost covering portion.

## Patentansprüche

1. Elektrodenanordnung (100), die umfasst:
eine Vielzahl von Elektroden (110, 120), die nebeneinander in einer Richtung angeordnet sind; und
einen Separator (130), der in einer Zickzackform gebildet und so konfiguriert ist, dass er die Vielzahl von Elektroden voneinander isoliert,
wobei
jede der Vielzahl von Elektroden (110, 120) enthält:
eine Elektrodenkollektorfolie (112, 122) und
eine Elektrodenaktivmaterialschicht (114, 124), die auf beiden Oberflächen der Elektrodenkollektorfolie vorgesehen ist,
wobei der Separator enthält:
eine Vielzahl von Zwischenabschnitten (132a), von denen jeder zwischen einem Paar von Elektroden angeordnet ist, die in der einen Richtung benachbart zueinander sind;
einen oberen gefalteten Abschnitt (132b), der ein oberes Ende eines Zwischenabschnitts der Vielzahl von Zwischenabschnitten und ein oberes Ende eines anderen Zwischenabschnitts der Vielzahl von Zwischenabschnitten verbindet, der an den einen Zwischenabschnitt auf einer Seite der einen Richtung angrenzt;
einen unteren gefalteten Abschnitt (132c), der ein unteres Ende des einen Zwischenabschnitts der Vielzahl von Zwischenabschnitten und ein unteres Ende eines anderen Zwischenabschnitts der Vielzahl von Zwischenabschnitten verbindet, der an den einen Zwischenabschnitt auf der anderen Seite der einen Richtung angrenzt; und
einen äußersten Abdeckabschnitt (132d), der den oberen gefalteten Abschnitt und den unteren gefalteten Abschnitt gemeinsam abdeckt,
wobei mindestens der obere gefaltete Abschnitt oder der untere gefaltete Abschnitt mit der Elektrodenkollektorfolie der Elektrode verschweißt ist, und
der untere gefaltete Abschnitt und der obere gefaltete Abschnitt mit dem äußersten Abdeckabschnitt verschweißt sind.

2. Elektrodenanordnung nach Anspruch 1, wobei
die Vielzahl von Elektroden eine Vielzahl von positiven Elektroden (110) und eine Vielzahl von negativen Elektroden (120) enthält,
die negative Elektrode über dem unteren gefalteten Abschnitt (132c) angeordnet ist, und
der untere gefaltete Abschnitt mit einem unteren Ende der Elektrodenkollektorfolie der negativen Elektrode (120) verschweißt ist.

3. Elektrodenanordnung nach Anspruch 1 oder 2, wobei
die Vielzahl von Elektroden eine Vielzahl von positiven Elektroden (110) und eine Vielzahl von negativen Elektroden (120) enthält, und
ein oberes Ende der negativen Elektrode mit dem äußersten Abdeckungsabschnitt verschweißt ist.

4. Elektrodenanordnung nach einem der Ansprüche 1 bis 3, wobei
die Vielzahl von Elektroden eine Vielzahl von positiven Elektroden (110) und eine Vielzahl von negativen Elektroden (120) enthält,
die Vielzahl von negativen Elektroden eine äußerste negative Elektrode (120E) enthält, die in der einen Richtung am äußersten Ende angeordnet ist, und
ein unteres Ende der äußersten negativen Elektrode mit dem äußersten Abdeckungsabschnitt verschweißt ist.

## Revendications

1. Ensemble d'électrodes (100) comprenant :
une pluralité d'électrodes (110, 120) agencées côte à côte dans une direction ; et
un séparateur (130) en forme de zigzag et configuré pour isoler la pluralité d'électrodes les unes des autres,
dans lequel
chacune de la pluralité d'électrodes (110, 120) inclut :
une feuille collectrice d'électrode (112,122), et
une couche de matériau actif d'électrode (114,124) prévue sur les deux surfaces de la feuille collectrice d'électrode,
le séparateur inclut :
une pluralité de portions intermédiaires (132a), chacune d'entre elles étant interposée entre une paire d'électrodes adjacentes l'une à l'autre dans ladite direction ;
une portion pliée supérieure (132b) qui raccorde une extrémité supérieure d'une portion intermédiaire de la pluralité de portions intermédiaire et une extrémité supérieure d'une autre portion intermédiaire de la pluralité de portions intermédiaires qui est adjacente à ladite portion intermédiaire sur un côté de ladite direction ;
une portion pliée inférieure (132c) qui raccorde une extrémité inférieure de ladite portion intermédiaire de la pluralité de portions intermédiaire et une extrémité inférieure d'une autre portion intermédiaire de la pluralité de portions intermédiaire qui est adjacente à ladite portion intermédiaire sur l'autre côté de ladite direction ; et
une portion de couverture la plus extérieure (132d) qui recouvre collectivement la portion pliée supérieure et la portion pliée inférieure,
au moins l'une de la portion pliée supérieure et de la portion pliée inférieure est soudée à la feuille collectrice d'électrode de l'électrode, et
la portion pliée inférieure et la portion pliée supérieure sont soudées à la portion de couverture la plus extérieure.

2. Ensemble d'électrodes selon la revendication 1, dans lequel
la pluralité d'électrodes inclut une pluralité d'électrodes positives (110) et une pluralité d'électrodes négatives (120),
l'électrode négative est disposée au-dessus de la portion pliée inférieure (132c), et
la portion inférieure pliée est soudée à une extrémité inférieure de la feuille collectrice d'électrode de l'électrode négative (120).

3. Ensemble d'électrodes selon la revendication 1 ou 2, dans lequel
la pluralité d'électrodes inclut une pluralité d'électrodes positives (110) et une pluralité d'électrodes négatives (120), et
une extrémité supérieure de l'électrode négative est soudée à la portion de couverture la plus extérieure.

4. Ensemble d'électrodes selon l'une quelconque des revendications 1 à 3, dans lequel
la pluralité d'électrodes inclut une pluralité d'électrodes positives (110) et une pluralité d'électrodes négatives (120),
la pluralité d'électrodes négatives inclut une électrode négative la plus extérieure (120E) disposée le plus à l'extérieur dans ladite direction, et
une extrémité inférieure de l'électrode négative la plus extérieure est soudée à la portion de couverture la plus extérieure.
